# EUROPÄISCHE PATENTSCHRIFT

(11) **EP 0 892 172 B1**
(45) Veröffentlichungstag und Bekanntmachung des Hinweises auf die Patenterteilung: **06.04.2005**
(21) Anmeldenummer: 98112820.0
(22) Anmeldetag: 10.07.1998
(51) Int. Cl.: F02P 15/00, F02F 1/24, F02P 9/00

(54) **Verfahren zum Betrieb einer direkteinspritzenden Otto-Brennkraftmaschine**
Method of operation for direct injection internal combustion engine
Procédé de fonctionnement d'un moteur à combustion interne à injection directe

(30) Priorität: 18.07.1997 DE 19730908
(43) Veröffentlichungstag der Anmeldung: 20.01.1999
(73) Patentinhaber: DaimlerChrysler AG, 70567 Stuttgart (DE)
(72) Erfinder: Baur, Bernd, 73732 Esslingen (DE); Hohner, Peter, 70771 Leinfelden-Echterdingen (DE); Karl, Günter, Dr., 73732 Esslingen (DE); Kemmler, Roland, 70619 Stuttgart (DE)

(56) Entgegenhaltungen:
- US-A- 5 297 519
- US-A- 5 335 635
- US-A- 5 553 594
- US-A- 5 568 801
- US-A- 5 577 473
- PATENT ABSTRACTS OF JAPAN vol. 006, no. 249 (M-177), 8. Dezember 1982 (1982-12-08) & JP 57 146059 A (NISSAN JIDOSHA KK), 9. September 1982 (1982-09-09)

## Beschreibung

Die Erfindung betrifft ein Verfahren zum Betrieb, insbesondere zum Schichtladungsbetrieb, einer direkteinspritzenden Otto-Brennkraftmaschine nach dem Oberbegriff des Patentanspruchs 1.

Die DE 43 24 642 A1 offenbart eine direkteinspritzende Otto-Brennkraftmaschine mit einem Injektor pro Zylinder, wobei in dem jeweiligen Brennraum mit dem eingespritzten Kraftstoff und der separat zugeführten Verbrennungsluft ein brennbares Kraftstoff/Luft-Gemisch gebildet wird. In den Brennraum ragen die Elektroden einer Zündkerze ein und nach Anlegen einer elektrischen Überschlagsspannung zwischen den Elektroden wird das Gemisch durch Funkenschlag gezündet. Bei der bekannten Brennkraftmaschine ist in weiten Kennfeldbereichen ein Schichtladungsbetrieb durch Kraftstoffeinspritzung während des Verdichtungstaktes im Arbeitsspiel des jeweiligen Zylinders vorgesehen. Durch Ladungsschichtung mit örtlich unterschiedlichen Kraftstoff/Luft-Konzentrationen wird der Kraftstoffverbrauch der Brennkraftmaschine insbesondere im Teillastbereich erheblich reduziert. Im Vollastbetrieb arbeitet die bekannte Brennkraftmaschine mit homogener Gemischbildung.

Im Schichtladungsbetrieb sind große Volumenanteile der Brennraumladung schwer entflammbar, da ihre Gemischkonzentrationen außerhalb der Zündgrenzen liegen, das heißt, das Gemisch zwischen den Elektroden der Zündkerze ist für eine Zündung entweder zu mager oder zu fett. Die Brennraumströmung beim Ladungswechsel führt den Elektroden der Zündkerze Gemischanteile unterschiedlicher Konzentrationen zu, welche nur teilweise innerhalb der Zündgrenzen liegen und zur Zündung durch den Zündfunken geeignet sind. Befindet sich nun zum Zündzeitpunkt, zu dem eine elektrische Überschlagsspannung zwischen den Elektroden angelegt wird, zur Zündung ungeeignetes Gemisch zwischen den Elektroden, so kann der überspringende Zündfunke keine Gemischentflammung herbeiführen. Die üblicherweise zur Erzeugung der Überschlagsspannung eingesetzten Transistor-Zündanlagen können während des gleichen Arbeitsspieles keinen weiteren Zündfunken erzeugen, da die Aufladungszeit der Zündspule hierfür zu groß ist. Kann der erzeugte Funke keine Zündung herbeiführen, so ist ein Zündaussetzer in diesem Arbeitsspiel nicht mehr zu vermeiden.

Darüber hinaus ragen bei der bekannten Otto-Brennkraftmaschine die Elektroden der Zündkerze weit in den Brennraum ein, um fette Gemischanteile zu erfassen und werden daher fortlaufend mit Kraftstoff benetzt, was zur Bildung von Ablagerungen auf der Zündkerze führt. Über die Rußbrücken können Gleitentladungen der Überschlagspannung auf den Zündkerzenisolator erfolgen, wodurch zusätzlich begünstigt durch das verringerte Hochspannungsangebot der Zündanlage ein Zündaussetzer auftreten kann. Es muß daher oft zur Zündung magerer Gemische eine höhere Zündenergie durch die Zündanlage bereitgestellt werden, wobei jedoch beispielsweise beim Einsatz von Kondensatorzündanlagen zwar sehr energiereiche Zündfunken erzeugt werden können, welche jedoch oft aufgrund ihrer sehr kurzen Zünddauer das Gemisch nicht entflammen können. Zündaussetzer gilt es auf jeden Fall zu vermeiden, da das unverbrannt ausgeschobene Gemisch des betroffenen Arbeitsspieles hohe Abgasemissionen der Brennkraftmaschine verursacht.

Aus der US 5,577,473 ist ein Einspritzventil für direkteinspritzende Brennkraftmaschinen bekannt, welches einen kegelförmigen Kraftstoffstrahl in den Brennraum einspritzt. Um im Schichtladungsbetrieb eine Fremdzündung zu ermöglichen, ist am Umfang der Kegelstrahldüse eine Ausnehmung in Drehwinkellage der Zündkerzenposition im Brennraum vorgesehen, wodurch bei der Einspritzung ein aus dem Kegelmantel austretender Kraftstoffstrahl erzeugt wird und Gemischanteile zwischen die Zündkerzenelektroden gebracht wird.

Die US 5,553,594 offenbart ein Verfahren zur Regelung eines Zündsystems für Brennkraftmaschinen, bei dem zur Schonung der Zündkerze ein modulierbarer Wechselstrom zur Auslösung des Zündfunkens eingesetzt wird. Die Lebensdauer wird durch Anpassung des Wechselzündstroms in Abhängigkeit des Betriebspunktes der Brennkraftmaschine wie beispielsweise Last, Drehzahl oder Temperatur gesteuert, wobei als weiterer Parameter auch die Dauer des Zündintervalls herangezogen wird, in dem der Zündfunke ausgelöst wird.

Der Erfindung liegt die Aufgabe zugrunde, ein Verfahren zum Betrieb einer direkteinspritzenden Otto-Brennkraftmaschine zu schaffen, welches insbesondere im Schichtladungsbetrieb eine sichere Gemischzündung und Verbrennung gewährleistet.

Diese Aufgabe wird erfindungsgemäß mit den Merkmalen des Anspruchs 1 gelöst.

Eine Zündanlage erzeugt Wechselspannung und damit die Zündspannung mit einer derart hohen Transformationsgeschwindigkeit und lädt die Zündspule auf, dass die paketweise von der Zündspule abgegebenen Energiemengen praktisch einen kontinuierlichen Zündfunken erzeugen. Die Energiepakete können in beliebiger Menge aufeinanderfolgend von der Zündanlage erzeugt werden, wodurch ein Zündfunke beliebiger Funkendauer zwischen den Elektroden ausgebildet werden kann, wobei die Funkendauer betriebspunktabhängig vorgegeben wird. Führt die angelegte Zündspannung nicht zu einer Gemischentflammung, beispielsweise aufgrund von Gleitentladung des Funkens über den Zündkerzenisolator, so kann im gleichen Arbeitsspiel ein weiterer Zündfunke ausgelöst und das Gemisch sicher gezündet werden. Vorteilhaft wird der Zündanlage ein Steuersignal mit Aussage über die erforderliche Funkendauer zugeführt, welches eine Steuereinheit unter Zugrundelegung mindestens eines Betriebsparameters der Brennkraftmaschine, beispielsweise der Motordrehzahl, Betriebslast, Schichtladebetrieb, Abgasrückführung usw., erzeugt. Die Zuordnungsinformation der jeweiligen Funkendauer zum ermittelten Betriebspunkt der Brennkraftmaschine kann in einem Kennfeldspeicher abgelegt sein und wird dort von der Steuereinheit bedarfsweise entnommen.

Besonders vorteilhaft können auch in einem Zündintervall während jedes Arbeitsspiels mehrere Zündfunken hintereinander ausgelöst werden, so daß die Wahrscheinlichkeit, daß einer dieser Zündfunken entflammbare Gemischkonzentrationen zwischen den Elektroden erfaßt, mit geringem Energieeinsatz der Zündanlage erhöht ist.

Ein Ausführungsbeispiel der Erfindung ist nachstehend anhand der Zeichnung näher erläutert. Es zeigen:
- Fig. 1: einen Längsschnitt durch einen Zylinder einer direkteinspritzenden Otto-Brennkraftmaschine,
- Fig. 2: in einem Diagramm den grafischen Verlauf der Gemischkonzentration zwischen den Elektroden der Zündkerze über der Zeit während eines Arbeitsspiels.

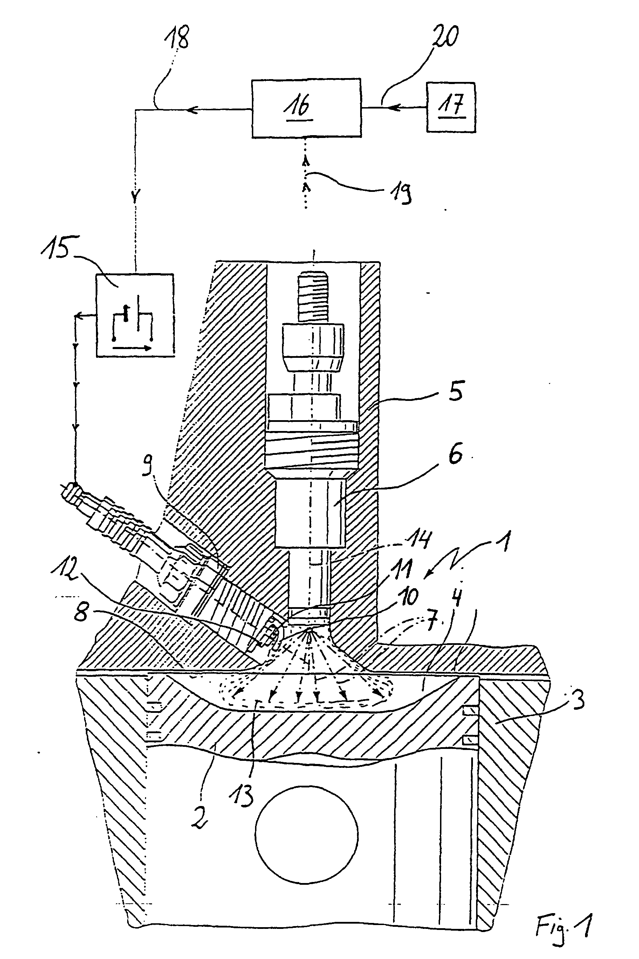

In Fig. 1 ist in einem Längsschnitt durch eine direkteinspritzende Otto-Brennkraftmaschine 1 ein Zylinder 3 dargestellt, in dem ein Kolben 2 längsbeweglich angeordnet ist und einen Brennraum 4 begrenzt. Ein Zylinderkopf 5 deckt den Zylinder 3 ab und verschließt den Brennraum 4. Im Zylinderkopf 5 ist in zentraler Position auf einer Zylinderachse 14 liegend ein Injektor 6 mit Zugang zum Brennraum 4 angeordnet, welcher zur Gemischbildung mit separat über einen nicht dargestellten Ansaugkanal zugeführter Verbrennungsluft Kraftstoff in den Brennraum einspritzt. Der Kraftstoff wird dabei durch eine Kegelstrahldüse des Injektors 6 in einem sich zum Kolben 2 aufweitenden Kegelstrahl 7 zentral in den Brennraum 4 eingespritzt. In weiten Kennfeldbereichen der Brennkraftmaschine 1 ist ein Schichtladungsbetrieb durch Kraftstoffeinspritzung während des Verdichtungstaktes im Arbeitsspiel des jeweiligen Zylinders 3 vorgesehen. Der Kegelstrahl 7 wird während des Kompressionshubes des Kolbens 2 eingespritzt, wodurch in zentraler Position im Brennraum eine geschichtete Gemischwolke 13 gebildet ist. Die Kraftstoffkonzentration nimmt dabei vom Kern der Gemischwolke 13 zum Strahlrand des Kegelstrahls 7 hin ab. Mit der Ladungsschichtung lassen sich insbesondere im Teillastbereich durch die Gemischabmagerung in großen Teilen des Brennraums 4 und der vorwiegend zentralen Bereitstellung der zu verbrennenden Kraftstoffmenge Verbrauchsvorteile erzielen.

Eine Zündkerze 9 ist derart im Zylinderkopf 5 angeordnet, daß ihre Elektroden 10, 11 durch das Brennraumdach 8 in den Brennraum 4 einragen und dabei im Randbereich des Kegelstrahls 7 beziehungsweise der Gemischwolke 13 liegen. Durch die Anordnung im Strahlrandbereich wird eine Kraftstoffbenetzung der Elektroden 10, 11 und die damit verbundene Bildung von Ablagerungen weitgehend verhindert, welche zu schädlichen Gleitentladungen über dem Isolatorfuß 12 der Zündkerze 9 führen. Zur Zündung der Gemischwolke 13 wird zwischen der Mittelelektrode 10 und der Masseelektrode 11, welche elektrisch mit dem Zylinderkopf 5 verbunden ist, von einer Zündanlage 15 eine elektrische Überschlagspannung angelegt und ein Zündfunke ausgelöst. Die Zündanlage erzeugt Wechselspannung und transformiert in dem kurzen Zeitraum von etwa 12 Mikrosekunden die notwendige Überschlagspannung und lädt die Zündspule der Zündanlage auf. Mit diesem raschen Hochspannungsaufbau können entsprechende Energiepakete in beliebiger Menge aufeinanderfolgend erzeugt werden, wodurch sich ein Zündfunke beliebiger Länge ergibt. Der schnelle Hochspannungsaufbau führt darüber hinaus zu geringen Verlusten durch Ohmschen Nebenschluß aufgrund der Verrußung der Elektroden 10, 11 und des Isolatorfußes 12 und ermöglicht die Erzeugung einer großen Hochspannung. Der schnelle Hochspannungsaufbau begünstigt darüber hinaus den Funkendurchbruch zwischen den Elektroden und verhindert Gleitentladungen über den Zündisolator 12.

Abhängig vom jeweiligen Betriebspunkt der Brennkraftmaschine 1 erzeugt eine Steuereinheit 16 ein Steuersignal 18 mit Aussage über die erforderliche Funkendauer, welches der Zündanlage 15 zur Veranlassung der Gemischzündung durch die Zündkerze 9 zugeführt wird. Zur Ermittlung des vorliegenden Betriebspunktes werden der Steuereinheit 16 fortlaufend ermittelte Meßdaten verschiedener Betriebsparameter 19 der Brennkraftmaschine 1 zugeführt, wie etwa Drehzahl, Betriebslast usw. und der Bestimmung der erforderlichen Funkendauer zugrundegelegt. Die Steuereinheit 16 entnimmt einem Kennfeldspeicher 17 dort abgelegte Zuordnungsinformationen 20 der für die Zündsicherheit und den optimalen Betrieb der Brennkraftmaschine im Voraus ermittelten Funkendauer zu dem vorliegenden Betriebspunkt. Es wird daher mit einem minimalen Energieaufwand die sichere Gemischentflammung durch die im Randbereich der Gemischwolke 13 liegenden Elektroden 10, 11 gewährleistet. Mit der langen Funkendauer wird sichergestellt, daß die aufgrund von Brennraumströmungen beim Ladungswechsel zeitweise an den Elektroden 10, 11 vorliegenden, zündfähigen Gemischvolumen vom Zündfunken erfaßt werden.

Im Leerlaufbetrieb der Brennkraftmaschine 1 wird eine geringe Menge Kraftstoff in den Brennraum 4 eingespritzt, wodurch im Schichtladungsbetrieb eine lange Funkendauer von bis zu 5 Millisekunden zur Gemischzündung erforderlich ist. Das Gemisch an den Elektroden 10, 11 der Zündkerze 9 ist aufgrund des geringen Kraftstoffeintrages am Rand der Gemischwolke 13 für eine Zündung zu mager, wobei jedoch die Brennraumströmung beim Ladungswechsel vorübergehend zündfähiger Gemischanteile zwischen die Elektroden 10, 11 treibt, welche mit dem über die lange Funkendauer anhaltenden Zündfunken sicher entflammt wird. Mit zunehmender Last der Brennkraftmaschine erhöht sich die Einspritzmenge und eine entsprechend kürzere Funkendauer reicht zur Gemischentflammung aus. Im Vollastbetrieb der Brennkraftmaschine erfolgt eine homogene Gemischbildung, wobei aufgrund der guten Gemischbereitung nur entflammbares Gemisch zwischen den Elektroden vorliegt und eine minimale Funkendauer von etwa 0,3 Millisekunden zur Zündung ausreicht.

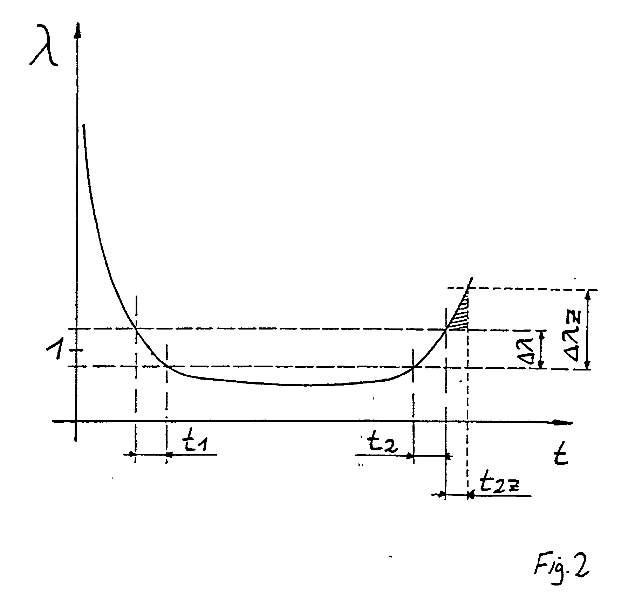

Die lange Funkendauer aufgrund des raschen Hochspannungsaufbaus zwischen den Elektroden aus der Wechselspannung ermöglicht die Ausweitung des für die Zündung zur Verfügung stehenden Zeitfensters, wie das Diagramm der Fig. 2 zeigt. Dargestellt ist der zeitliche Verlauf der Gemischkonzentration zwischen den Elektroden der Zündkerze wäh-rend eines Arbeitsspiels, wobei auf der Abszisse des Diagramms die Zeit t angegeben ist und die Ordinate die Luftzahl λ der Gemischkonzentration bezeichnet. Der grafische Verlauf verdeutlicht, daß unmittelbar nach der Einspritzung die Luftzahl zwischen den Elektroden rasch in den überfetteten Bereich außerhalb der Zündgrenzen fällt und nach einer bestimmten Aufbereitungszeit wieder rasch in magere Zusammensetzungen steigt. Eine Gemischzündung durch den Zündfunken kann nur dann erfolgen, wenn die Gemischzusammensetzung innerhalb der Zündgrenzen Δλ um die stöchiometrische Luftzahl λ = 1 liegt.

Zur erfolgversprechenden Gemischzündung stehen somit zwei Zeitintervalle t₁ und t₂ zur Verfügung, während denen die Gemischzusammensetzung zwischen den Elektroden zündfähig ist. Vor Erreichen des ersten Zündintervalls t₁ sowie nach Verlassen des zweiten Zündintervalls t₂ liegt mageres Gemisch vor, während zwischen den beiden Zündintervallen das vorliegende Gemisch für eine Zündung zu fett ist. Mit der langen Funkendauer aufgrund des Einsatzes von Wechselspamung kann jedoch das Zeitintervall t₂ verlängert werden, da auch nach Überschreiten der oberen, mageren Zündgrenze die Brennraumströmung kurzzeitig zündfähige Gemischanteile zwischen die Elektroden drängt, welche von dem lange andauernden Funken erfaßt werden. Das für eine zuverlässige Zündung zur Verfügung stehende Zeitintervall kann somit um einen Betrag t_{2Z} verlängert werden. Die Zündung erfolgt erfindungsgemäß während des zweiten Zeitintervalls t₂, wenn die Gemischwolke im Brennraum stabilisiert ist und zündfähiges Gemisch zwischen den Elektroden gehalten werden kann. Die Gemischwolke ist gegen Ende des Verdichtungstaktes homogenisiert, wodurch eine unvollständige Verbrennung und somit eine erhöhte Rußkonzentration im Abgas der Brennkraftmaschine vermieden ist.

Vorteilhaft können auch in einem Zündintervall während jedes Arbeitsspiels der Brennkraftmaschine mehrere Zündfunken hintereinander ausgelöst werden. Auch nach längerem Schichtladungsbetrieb und gegebenenfalls bereits gebildeten Rußablagerungen an den Zündkerzen kann die Wahrscheinlichkeit der Gemischentflammung bei geringem Energiebedarf der Zündanlage durch eine Vielzahl von gemischdurchschlagenden Zündfunken erhöht werden. Darüber hinaus führen Gleitentladungen einiger Zündfunken solcher Zündfunkenketten zu einem Freibrennen des Isolatorfußes der Zündkerze von Rußrückständen.

## Patentansprüche

1. Verfahren zum Betrieb einer direkteinspritzenden Otto-Brennkraftmaschine (1), wobei ein Injektor (6) pro Zylinder (3) Kraftstoff in den Brennraum (4) einspritzt und mit separat zugeführter Verbrennungsluft ein brennbares Kraftstoff/Luft-Gemisch gebildet wird, welches nach Anlegen einer elektrischen Überschlagspannung zwischen den in den Brennraum (4) einragenden Elektroden (10, 11) einer Zündkerze (9) durch Funkenschlag gezündet wird, wobei in weiten Kennfeldbereichen der Brennkraftmaschine (1) ein Schichtladungsbetrieb durch Kraftstoffeinspritzung während des Verdichtungstaktes im Arbeitsspiel des jeweiligen Zylinders (3) vorgesehen ist,
**dadurch gekennzeichnet,**
**daß** eine Zündanlage (15) Wechselspannung erzeugt und auf diese Weise rasch Hochspannung zwischen den Elektroden (10, 11) aufbaut und Zündfunken mit betriebspunktabhängig vorgebbarer Funkendauer auslöst, wobei die Zündung erfolgt während eines jeweils im Arbeitsspiel nachfolgenden Zündintervalls zweier zeitlich getrennter Zündintervalle, in denen zündfähige Gemischanteile zwischen den Elektroden (10, 11) vorliegen.

2. Verfahren nach Anspruch 1,
**dadurch gekennzeichnet,**
**dass** eine Steuereinheit (16) unter Zugrundelegung mindestens eines Betriebsparameters (19) der Brennkraftmaschine (1) ein Steuersignal (18) mit Aussage über die Funkendauer erzeugt und der Wechselspannungsanlage (15) zuführt.

3. Verfahren nach Anspruch 2,
**dadurch gekennzeichnet,**
**dass** die Steuereinheit (16) einem Kennfeldspeicher bedarfsweise dort abgelegte Zuordnungsinformationen (20) der Funkendauer zum Betriebspunkt entnimmt.

4. Verfahren nach einem der Ansprüche 1 bis 3,
**dadurch gekennzeichnet,**
**dass** in einem Zündintervall (t₂) mehrere Zündfunken ausgelöst werden.

5. Verfahren nach einem der Ansprüche 1 bis 4,
**dadurch gekennzeichnet,**
**dass** der Kraftstoff in einem sich zum Kolben (2) aufweitenden Kegelstrahl (7) zentral in den Brennraum (4) eingespritzt wird.

6. Verfahren nach Anspruch 5,
**dadurch gekennzeichnet,**
**dass** die Zündung im Bereich des Strahlrandes des Kegelstrahls (7) erfolgt.

## Claims

1. Method for the operation of a direct-injected SI engine (1), wherein one injector (6) per cylinder (3) injects fuel into the combustion chamber (4) and a combustible air/fuel mixture is generated using separately supplied combustion air and ignited by sparking following the application of an electrical flashover voltage between the electrodes (10, 11) of a spark plug (9), which project into the combustion chamber (4), with stratified charge operation being provided in wide characteristic map ranges of the internal combustion engine (1) by fuel injection during the compression stroke in the working cycle of the relevant cylinder (3),
**characterised in that**
an ignition system (15) generates an alternating voltage, thus quickly building up a high voltage between the electrodes (10, 11) and triggering sparks with a duration presettable in dependence on operating points, with the ignition process being initiated during the following-on ignition interval of two ignition intervals separated by time in any one working cycle, when ignitable mixture ratios are present between the electrodes (10, 11).

2. Method according to claim 1,
**characterised in that**
a control unit (16) generates a control signal (18) representing the spark duration on the basis of at least one operating parameter (19) of the internal combustion engine (1) and supplies it to the alternating voltage system (15).

3. Method according to claim 2,
**characterised in that**
the control unit (16) retrieves, whenever required, information (20) assigning the spark duration to individual operating points from a characteristic map memory where said information is stored.

4. Method according to any of claims 1 to 3,
**characterised in that**
several sparks are triggered in an ignition interval (t₂).

5. Method according to any of claims 1 to 4,
**characterised in that**
the fuel is injected centrally into the combustion chamber (4) in a conical jet (7) widening towards the piston (2).

6. Method according to claim 5,
**characterised in that**
ignition is initiated in the region of the periphery of the conical jet (7).

## Revendications

1. Procédé pour le fonctionnement d'un moteur (1) à combustion interne à injection directe, dans lequel un injecteur (6) par cylindre (3) injecte du carburant dans la chambre de combustion (4), et un mélange combustible carburant/air est formé avec de l'air de combustion alimenté séparément, mélange qui, après application d'une tension électrique d'éclatement entre les électrodes (10, 11) d'une bougie (9) qui dépassent dans la chambre de combustion (4), est amorcé par étincelles, et il est prévu dans de larges plages de champs caractéristiques du moteur à combustion interne (1) un fonctionnement à charge stratifiée par injection de carburant pendant le temps de compression dans le cycle de travail du cylindre respectif (3),
**caractérisé en ce que**
un système d'allumage (15) génère une tension alternative et établit ainsi rapidement une haute tension entre les électrodes (10, 11) et déclenche des étincelles d'allumage avec une durée prédéterminée en fonction de l'instant de fonctionnement, l'allumage s'effectuant pendant un intervalle d'allumage respectif suivant dans le cycle de travail parmi deux intervalles d'allumage séparés dans le temps, dans lesquels des parts de mélange explosives se présentent entre les électrodes (10, 11).

2. Procédé selon la revendication 1, **caractérisé en ce qu'**en prenant comme base au moins un paramètre de fonctionnement (19) du moteur à combustion interne (1), une unité de commande (16) génère un signal de commande (18) avec une information sur la durée de l'étincelle, et l'envoie au système à tension alternative (15).

3. Procédé selon la revendication 2, **caractérisé en ce que** l'unité de commande (16) prélève dans une mémoire de champ caractéristique des informations d'attribution (20) sur la durée d'étincelle à l'instant de fonctionnement, qui sont déposées dans ladite mémoire selon les besoins.

4. Procédé selon l'une des revendications 1 à 3, **caractérisé en ce que** plusieurs étincelles d'allumage sont déclenchées dans un intervalle d'allumage (t₂).

5. Procédé selon l'une des revendications 1 à 4, **caractérisé en ce que** le carburant est injecté au centre dans la chambre de combustion (4) sous forme de jet conique s'élargissant vers le piston (2).

6. Procédé selon la revendication 5, **caractérisé en ce que** l'allumage s'effectue dans la zone du bord du jet conique (7).
